Europäisches Patentamt

(19) European Patent Office

Office européen des brevets

(11) EP 0 936 778 A1

(12) EUROPEAN PATENT APPLICATION

(43) Date of publication:
18.08.1999 Bulletin 1999/33

(51) Int. Cl.$^6$: H04L 12/433

(21) Application number: 99201131.2

(22) Date of filing: 24.11.1988

(84) Designated Contracting States:
AT BE CH DE ES FR GB GR IT LI LU NL SE

(30) Priority: 22.12.1987 US 136701

(62) Document number(s) of the earlier application(s) in
accordance with Art. 76 EPC:
88311138.7 / 0 322 116

(71) Applicant:
SUN MICROSYSTEMS, INC.
Mountain View, CA 94043 (US)

(72) Inventors:
• Frank, Steven J.
Hopkinton, Massachussetts 01748 (US)
• Burkhardt, Henry III
Manchester, Massachussetts 01944 (US)
• Weber, Frederick D.
Cambridge, Massachussetts 02138 (US)

(74) Representative:
Greenwood, John David et al
Graham Watt & Co.
Riverhead
Sevenoaks Kent TN13 2BN (GB)

Remarks:
This application was filed on 09 - 04 - 1999 as a
divisional application to the application mentioned
under INID code 62.

(54) **Digital data transfer apparatus**

(57) A digital data transfer apparatus comprising:

A a communications network for transferring packets, said communications network including shift register means comprising a series of digital storage and transfer stages connected in a ring configuration for sequentially storing and transferring said packets, wherein each said stage within said shift register stores at least one said word,
B. a plurality of cells, each cell including

i a memory for storing information; and
ii. a cell interconnect unit connected to an associated subset of said stages and said associated memory, the cell interconnect selectively performing

(a) a transfer operation to enable said associated subset of said stages to transfer a packet received from a said stage associated with another of said cells to a said stage associated with yet another of said cells,
(b) an extracting operation to enable said associated subset of stages to transfer a packet received from a said stage associated with another of said cells to the memory associated with its cell; and

(c) a replicating operation to enable said associated subset of stages to transfer a packet received from a said stage associated with another of said cells to a said stage associated with yet another of said cells, and contemporaneously transfer the packet to the memory associated with its cell.

FIG. 1

EP 0 936 778 A1

**Description**

Background of the Invention

This invention relates generally to digital data processing systems, and, in particular, to a bus structure suitable for use with multiprocessor computer systems.

Multiprocessor computer systems provide multiple independent central processing units (CPUs) which can be coherently interconnected. Recent efforts in the multiprocesor field have concentrated on multiprocessor systems wherein each of a plurality of processors is equipped with a dedicated random access or cache memory unit. These multiple processors typically communicate with one another via a common system bus structure (i.e shared bus systems), or by signalling within a shared memory address area (i.e. shared address space systems).

In recent years, a wide range of structures and methods have been proposed or developed to interconnect the processors of a shared bus system multiprocessor.

One such shared bus muliprocessing computer system is disclosed in United Kingdom Patent Application No. 2,178,205 (published February 4, 1987). That system is understood to comprise a plurality of processors, each having its own dedicated cache memory, and wherein the cache memories are connected to one another over a shared bus.

Conventional shared bus systems, however, lack adequate bandwidth to provide multiple processors with short effective access times during periods of high bus contention. Although a number of caching schemes have been proposed and developed for the purpose of reducing bus contention, bus saturation still limits the speed and size of multiprocessor computers.

Additionally, the speed of a conventional bus structure is limited by the speed of light and by bus length. In particular, as more processors are linked to a conventional bus, bus length increases and thus the time required for signal transfer increases.

Another class of interconnection systems, known as crossbar networks, avoid some of the limitations of conventional bus systems. In a crossbar network, however, the path taken by a given signal cannot be uniquely specified. Moreover, cost increases as the square of the number of interconnected processors. These characteristics make crossbar networks unsuitable for multiprocessor systems.

There accordingly exists a need for an interconnection system for multiprocessor computer systems which can accomodate the large volume of interconnect access requests generated by multiple processors. In particular, there exists a need for an interconnection system in which transfer speed is independent of the number of interconnected processors.

It is thus an object of the invention to provide an improved multiprocessor digital data processing system.

Summary of the Invention

The present invention is digital data processing apparatus comprising

A. bus means for transferring information-representative digital signals, said bus means including shift register means having a set of digital storage and transfer stages connected in series, for sequentially storing and transferring said information-representative digital signals, and
B. a plurality of processing cells, connected in a ring configuration to said bus means, at least one of said cells including any of

(i) a central processing unit,
(ii) an associated memory element for storing information-representative digital signals, coupled with said central processing unit fir information transfer therebetween, and
(iii) associated cell interconnect means, connected in circuit with said shift register means, and with an associated central processing unit, For transferring information-representative signals onto said shift register means.

In one embodiment of the invention, the bus structure comprises unidirectional information-representative signal flow paths, and the cell interconnect units include elements for driving information-representative signals along the flow path defined by the bus structure.

Preferably each stage of the shift register element includes latch and register elements for storing a digital information-representative signal word of (n) digital bits, where (n) is a positive integer, and the cell interconnect units include timing control elements responsive to applied digital clock cycle signals for sequentially driving information-representative digital words through successive stages of the shift register element at a rate controlled by the digital clock cycle rate. In accordance with this aspect of the invention, the shift register element includes elements for storing in a given stage of the shift register element a given digital word for one applied digital clock cycle, and transferring a given digital word to a succeeding stage of the shift register element after an applied digital clock cycle. Moreover, in this aspect of the invention, each cell interconnect unit has associated therewith a subset of (s) stages of the shift register structure, where (s) is a positive integer, so that a given digital word is resident in a stage associated with each cell interconnect unit for (s) applied digital clock cycles.

The shift register structure may include elements for sequentially tansferring digital signal packets comprising (w) corresponding digital words, where (w) is a positive integer, so that a digital word corresponding to a given digital signal packet is resident in at least one stage associated with a given cell interconnect unit For (s) X (w) digital clock cycles.

Brief Description of the Drawings

Embodiments of the present invention will now be described, by way of example, with reference to accompanying drawings, in which:

Figure 1 depicts the structure of a multiprocessor computer system constructed in accordance with the invention;
Figure 2 depicts detail of the structure of a processing cell illustrated in Figure 1;
Figure 3 depicts a plurality of the processing cells of Figure 2 interconnected by a bus system constructed in accordance with the invention;
Figure 4 depicts detail of the structure of a cell interconnect of Figure 3;
Figure 5 depicts detail of the structure of a cell interconnect unit in the cell interconnect of Figure 4;
Figure 6 depicts the shift register stages associated with the cell interconnects of Figure 3;
Figure 7 depicts clock signal distribution in the embodiment of Figure 3; and
Figure 8 depicts the contents of an exemplary data packet processed by the embodiment of Figure 3.

Description of the Illustrated Embodiment Structure

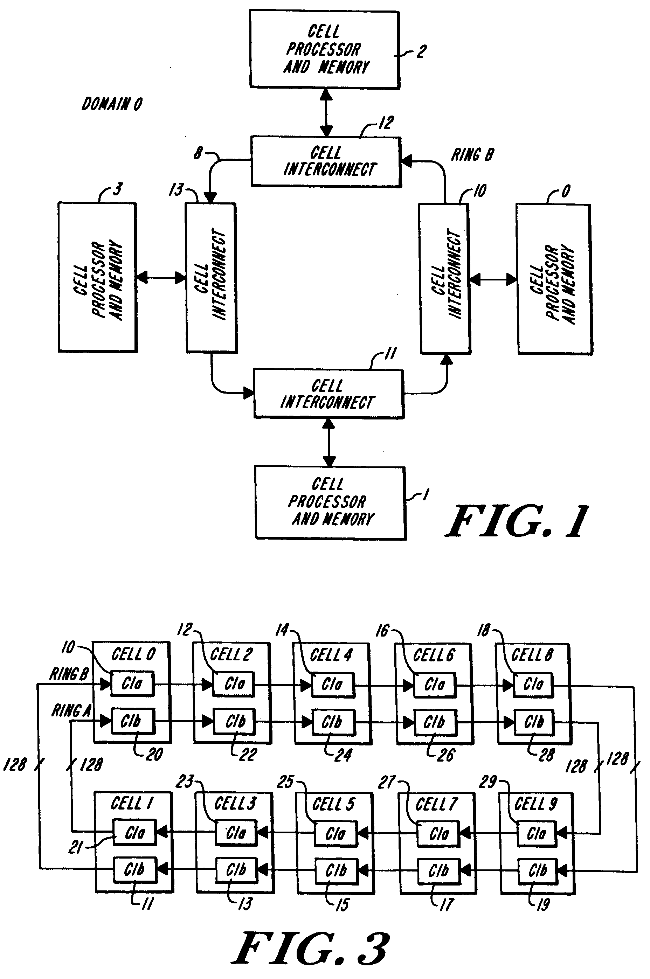

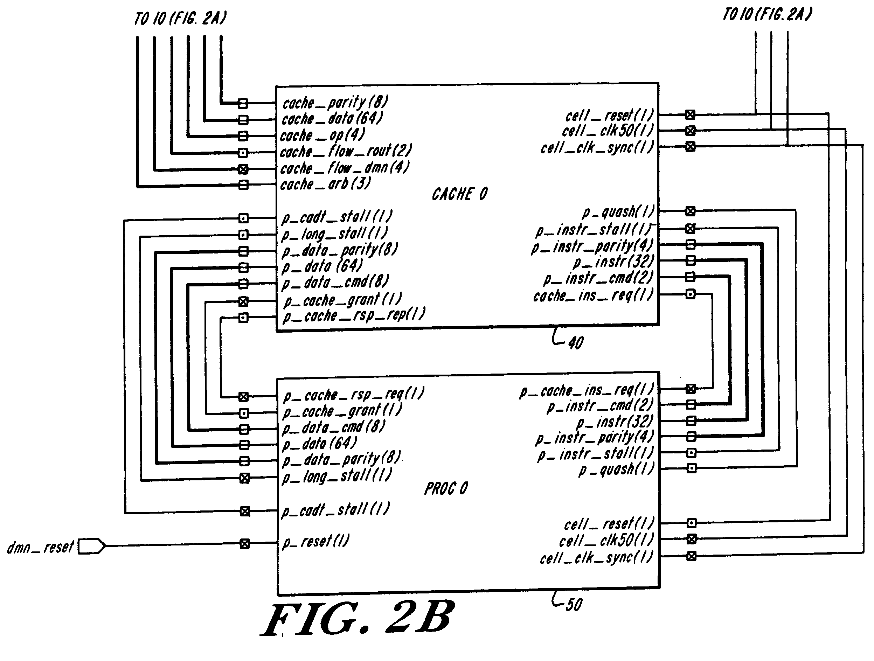

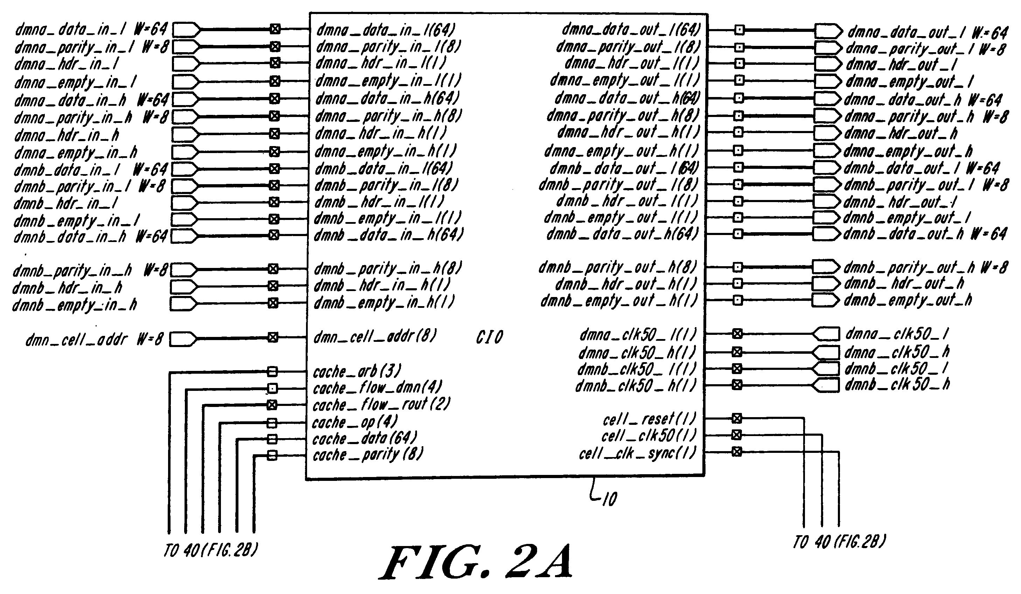

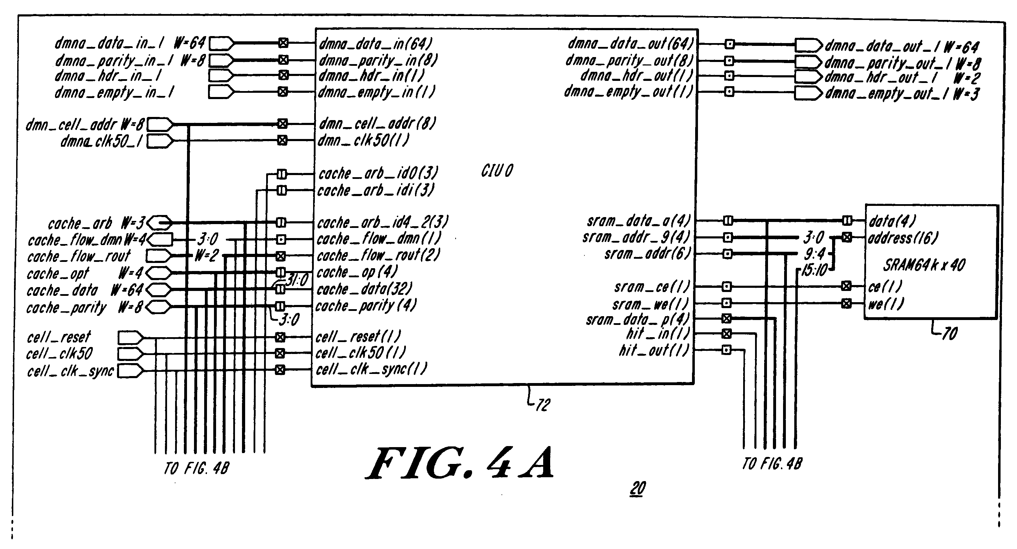

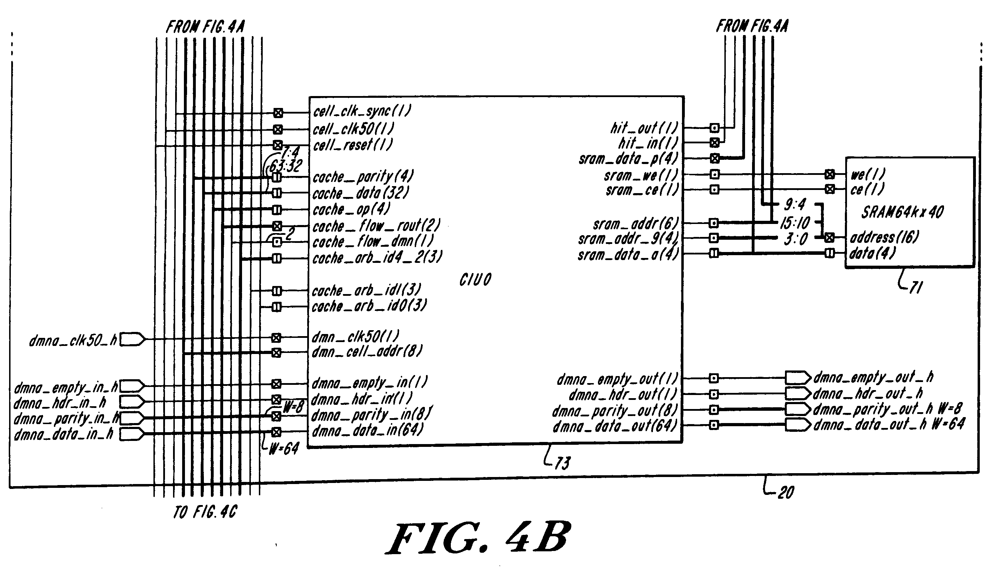

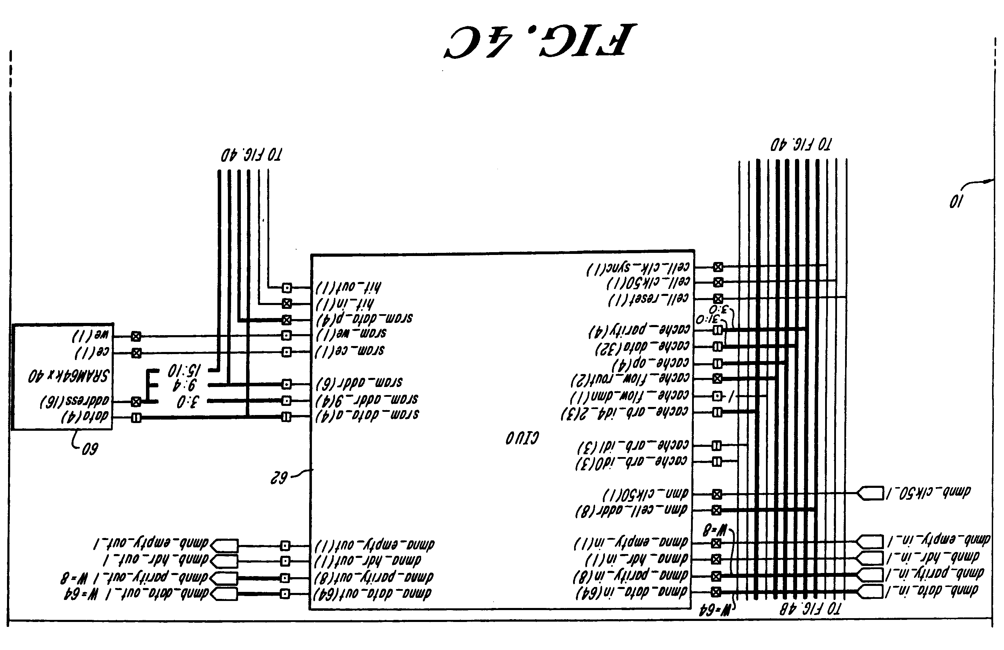

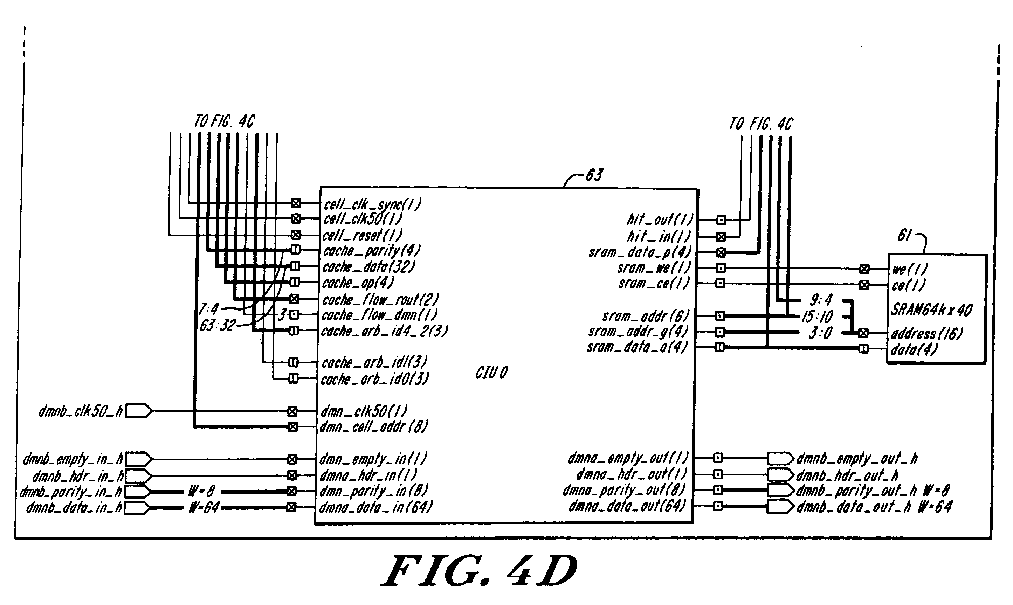

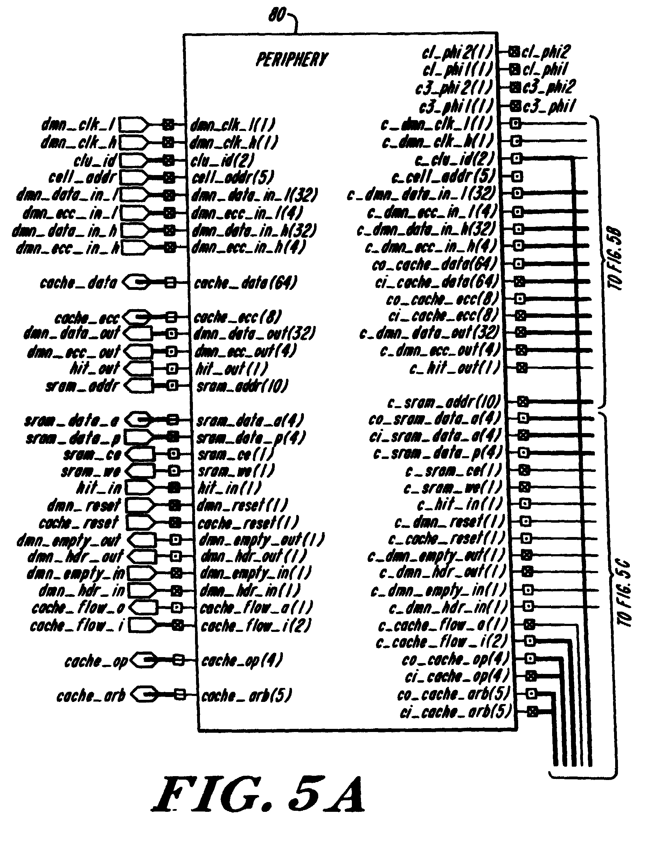

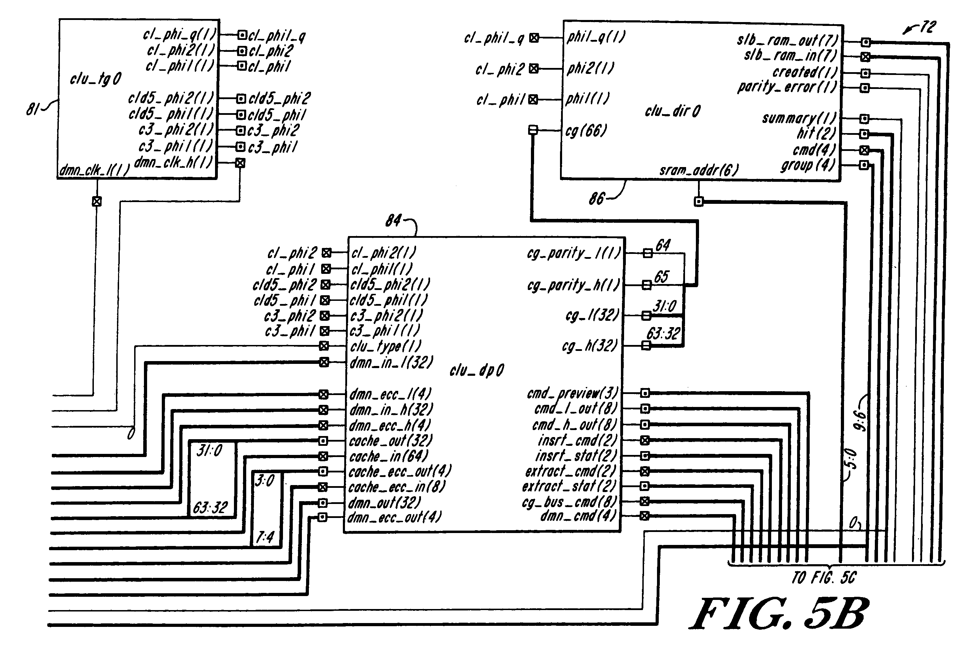

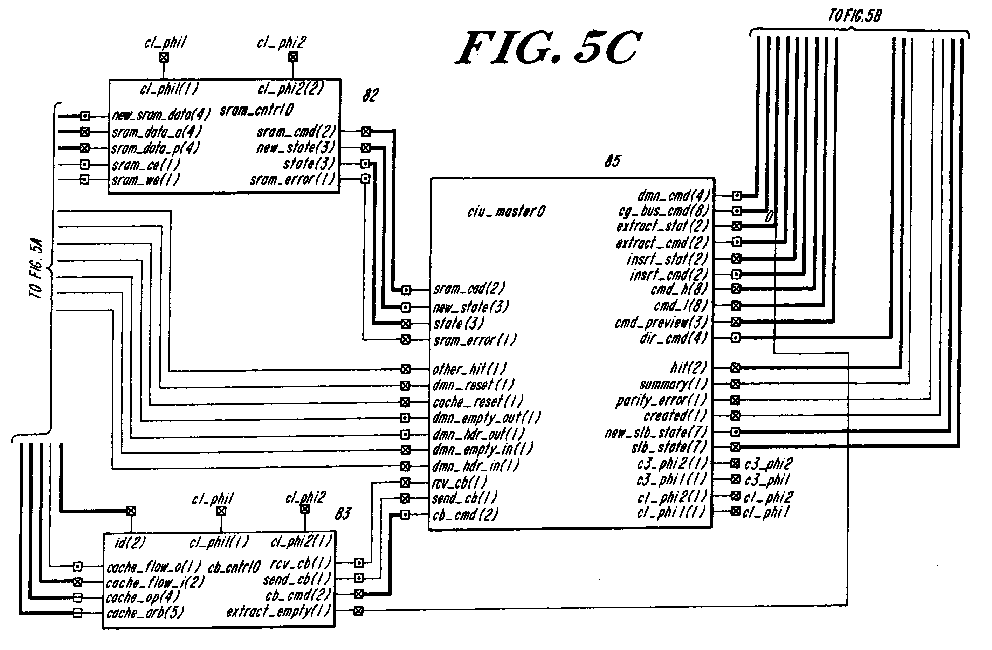

Figure 1 depicts a multiprocessor computer utilizing a bus system constructed in accordance with the invention. The multiprocessor system is hierarchically constructed from processors, cells and domains. Each of the processisng cells 0, 1, 2 and 3 contains a processor and cache memory, as discussed below in connection with Figure 2. The cells 0-3 are interconnected by cell interconnects (CIs) 10-13 and bus 8, thereby collectively forming Domain 0. Domains, in turn, are interconnected by domain interconnects (not shown), to form a complete system. The structure of cell interconnects is described hereinafter in connection with Figures 4 and 5, and the structure and operation of the illustrated multiprocessor system is more fully discussed in European Patent Application No. (corresponding to United States Patent Application Serial No. 136930) Filed on even date herewith.

Figure 2 depicts the components of processing cell 0, including processor (PROC) 50, cache 40 and cell interconnect (CI) 10. Data, parity, and control signals passed between processor 50, cache 40 and cell interconnect 10 are indicated in Figure 2. The datapath width associated with each respective signal is indicated by numerals in brackets. For example, cache data signals (cache_data [64]) passed between cell interconnect 10 and cache 40 have a 64 bit datapath width, as do processor data signals (p_data[64]) passed between cache 40 and processor 50.

As FIGURE 2 illustrates, cell interconnect 10 receives and transmits DOMAIN DATA signals (dmn_data), DOMAIN PARITY signals dmn parity, DOMAIN EMPTY signals (dmn_empty), DOMAIN HEADER signals (dmn_hdr), DOMAIN CELL ADDRESS signals (dmn_cell_addr), and DOMAIN CLOCK signals (dmn_clk50) discussed in greater detail hereinafter. In addition, cell interconnect 10 processes cache arbitration, routing, operation, and parity signals as indicated in FIGURE 2. The structure of cell interconnect 10 is discussed in greater detail below in connection with FIGURE 4. Moreover, further understanding of the logic components and structure of cache 40 and processor 50 may be bad by reference to the aforementioned copending European application. Cell interconneot 10 provides interconnection of cell 0 into a multiple-cell domain like that depicted in FIGURE 3.

FIGURE 3 illustrates the configuration of a ten cell domain, containing cells 0-9 interconnected in accordance with the invention in a dual ring bus structure organized as ring A and ring B. Utilizing plural rings is an important feature of the invention, which enables the system to continue operating in the event of single point component failures, and increases the bandwidth of the interconnection system. In a preferred practice of the invention, utilizing two rings, A and B, ring A is configured for transfers involving even page addresses in memory, and ring B for odd page addresses in memory. This interleaving mode is discussed in greater detail hereinafter. Those skilled in the art will understand that the invention may be practiced in an embodiment having more than two rings.

Rings A and B are preferably 50 megahertz synchronous shift registers having plural data storage stages with a 128 bit datapath width, as indicated in FIGURE 3. Each of the cells 0-9 communicates with rings A and B through two associated Cell Interconnects (CIs). As FIGURE 3 illustrates, cell interconnects 10-19 connect cells 0-9, respectively, to ring B, while cell interconnects 20-29 connect cells 0-9, respectively, to ring A.

A preferred cell interconnect structure is illustrated in FIGURE 4. Two cell interconnect units (CIUs) 72 and 73 and two 64K X 4 static RAMs (SRAMS) 70 and 71 are configured in pairs to form a single cell interconnect 30. Similarly, cell interconnect units 62 and 63, and SRAMs 60 and 61 are utilized to form cell interconnect 10. Each cell interconnect presents two 64 bit data connections from its cell to a respective ring (dmn_data) and one 64 bit connection to its cell cache bus (cache_data). The structure and operation of such a cell cache bus are described in the aforementioned copending European application. Through these connections, the cell interconnect moves requests and responses between the cell and a respective ring.

The ring connections of each cell interconnect collectively form an input port and an output port. In operation, each cell interconnect moves the data on its input port through two stages (comprising four latches), modifies the data as required by a given cell interconnect unit operation and presents the data on its output port. Accordingly, when a number of cell interconnects are linked in a loop, the delay stages form a shift register such as Ring A or Ring B. Each cell interconnect receives data from the previous cell interconnect in its ring and forwards data to the next. An insertion and extraction protocol described in greater detail hereinafter allows the cell interconnects to pass data between cells.

As FIGURE 4 illustrates, each cell interconnect unit (CI) is formed by two cell interconnect units (CIUs), and associated SRAMs for storing state bits. Each cell interconnect unit (CIU), in turn, is constructed from a plurality of integrated circuits. The integrated circuits which form cell interconnect unit (CIU) 72 are depicted in FIGURE 5.

The cache bus connection of the cell interconnect is a bi-directional interface. The cell interconnect receives data from the cache bus to send to the ring and places data it receives from the ring onto the cache bus to be serviced by the cache control unit or domain routing unit. The structure and operation of preferred cache control and domain routing units are described in the aforementioned copending European application.

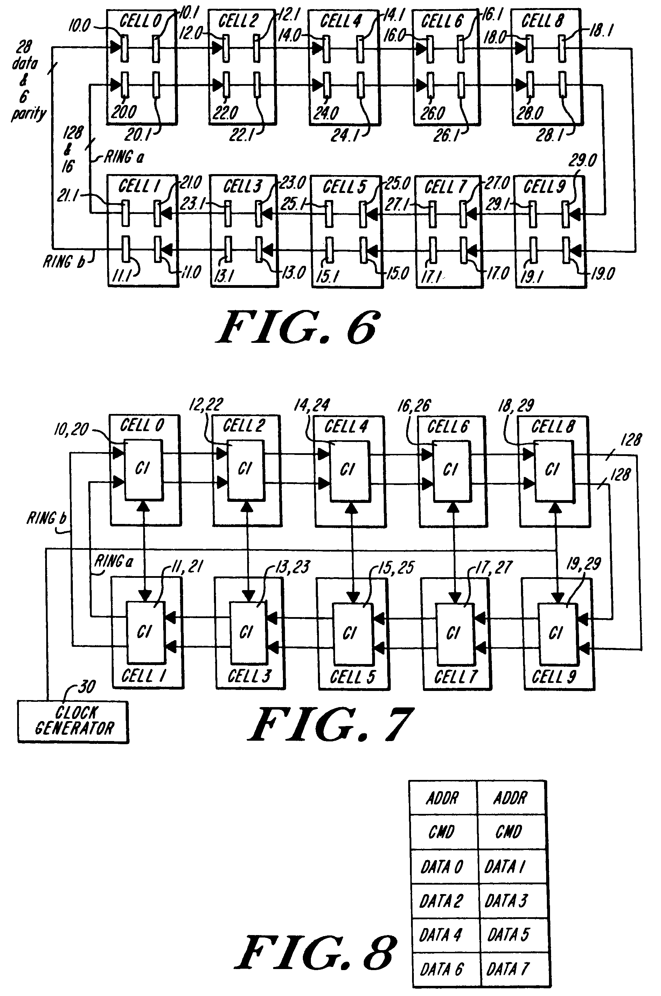

As illustrated in FIGURE 6, each cell interconnect contributes two shift register stages to the shift register structures of rings A and B. For example, a ring with ten cell interconnects, such as rings A and B shown in FIGURE 6, consists of twenty pipeline stages. Each pipeline stage is capable of selectively storing and transferring an information-representative signal representing one data word. All data words circulate through the ring by progressing, in parallel, at the rate of one stage per applied clock cycle. It is this feature of the invention which allows each cell to uniquely identify the source and destination of each data word on the bus, and determine appropriate processing steps for each data word. One example of a preferred clock signal distribution configuration is depicted in FIGURE 7.

In accordance with the invention, cell interconnect unit (CIU) 72 is constructed from periphery unit 80, CIU tag unit 81, SRAM control unit 82, cache bus control unit 83, CIU data path unit 84, CIU master control unit 85, and CIU directory unit 86. The integrated circuits illustrated in FIGURE 5 contain latches, FIFO buffers, multiplexors (MUXs) and other conventional logic elements.

In particular, the CIU datapath associated with CIU datapath circuit 84 is a 36 bit wide datapath including low and high cache group units, an extract FIFO and an insert FIFO. These four units collectively provide paths for (i) moving addresses from the domain interconnected by rings A and B, and from the cache bus, to the directory for address lookup, (ii) moving packets through the two pipeline stages of each CIU, (iii) moving packets from the domain to the cache bus, and (iv) moving packets from the cache bus to the domain.

The low and high cache group units direct appropriate addresses to the CIU directory circuit 86 for lookup, and provide modification of directory entries. In particular, the cache group units can pass domain, cache or recirculated addresses for lookup operations, modify directory entries, and move data from directory 86 to the associated cache bus.

The extract FIFO unit moves data from the CIU domain inputs into a holding register file, and subsequently passes the data to the associated cache bus. The insert FIFO unit moves data from the cache bus inputs into a holding register file, and subsequently passes this data to the CIU domain outputs. Additionally, the insert FIFO unit provides for modifying packets on the domain formed by rings A and B. The datapath control section associated with CIU datapath unit 84 receives commands from the master control unit 85 and converts them into command signals for use by the elements of the CIU datapath. Detailed schematics and timing diagrams for the elements of these integrated circuits are set forth in Appendix A, incorporated herein.

Top level control of the CIU 72 is managed by the CIU master control circuit 85, the SRAM control circuit 82, and the cache bus control circuit 83. The master control circuit 85 receives PACKET HEADER and EMPTY STATUS bits, and provides sequencing to the directory block to perform address lookups. The master control circuit 85 utilizes the results of those lookup operations to determine which of the PASS, EXTRACT and INSERT operations, discussed in greater detail hereinafter, is appropriate. The master control circuit 85 performs those operations based upon signals from the CIU data path circuit 84 and cache bus control circuit 83.

The SRAM control circuit 82 generates control signals for addressing the external SRAMS 70 and 71 used by the CIU 72 and illustrated in FIGURE 4. The cache bus control circuit 83 manages arbitration and flow control on the cache bus. The cache bus control circuit 83 receives command signals from the master control circuit 85, and in turn, transmits status report signals to the master control circuit 85.

Signals and Fields

As FIGURE 7 illustrates, a single domain clock signal (h,l), generated by clock generator 30, is distributed to the entire domain interconnect formed by rings A and B. Domain clock (h,l) provides 50mhz synchronous timing information to the cell interconnects within the domain interconnect formed by rings A and B.

By properly distributing domain clock (h,l), the effective clock skew for a cell interconnect such as, for example, the cell interconnect 14 corresponding to cell 4, is the clock skew between that cell interconnect's input stage 14.0 and prior adjacent cell interconnect (cell 2) and its output stage 14.1 and next adjacent cell (cell 6). An important advantage of the invention is that clock skew is not accumulative, and propagation time between cell interconnects is independent of the number of cell interconnects or stages.

The fundamental result is that the clock cycle time --i.e. the inverse of the clock frequency -- of the domain interconnect is simply the cycle time between two adjacent cell interconnects. The clock cycle time does not increase and frequency does not decrease as the number of cell interconnects is increased. Thus, as the number of cell interconnects in a ring is increased, the flux of operations through the ring is constant, while the number of bus operations which can be executed during a complete bus cycle increases linearly. This is an important feature of the invention, which is ideally suited for multiprocessor structures.

The high speed nature of a domain interconnect constructed in accordance with the invention is further enhanced by two topological factors. First, the output (i.e. second) stage of each cell interconnect drives a single load, the input stage of the adjacent cell interconnect. Second, each cell interconnect requires connection to only its two neighboring cell interconnects, allowing close proximity of all directly connected cell interconnects. This combination of absolute minimal loading and very short physical distance between, adjacent cells minimizes propagation time between cell interconnects.

Those skilled in the art will understand that while the embodiment described above in connection with FIGURE 7 utilizes a synchronous clock, the invention can be practiced in connection with an asynchronous or self-timed clock configuration.

In accordance with the invention, data circulating through a given ring is divided into data packets of ten data words, corresponding to ten shift register ring stages. The number of shift register stages must be an exact multiple of the number of data words in a data packet. Given, for example, a ring with twenty cells and two register stages per cell, the ring consists of forty stages. Thus, four ten-word packets can be transferred simultaneously in this ring. This property is generalized below in Table I.

TABLE I

| Number of CI | Number of Stages | Number of Packets |
|---|---|---|
| 5 | 10 | 1 |
| 10 | 20 | 2 |
| 15 | 30 | 3 |
| 20 | 40 | 4 |

The invention is preferably practiced in connection with the packet configuration shown in FIGURE 8. The first data word in each half is an address, the second data word is a command and the remaining data words are data, as indicated in FIGURE 8. Those skilled in the art will understand that alternative packet configurations are possible and within the scope of the invention.

In addition to the operations described above, a cell interconnect can modify the command field of a packet. For example, a cell interconnect can extract a packet by copying the packet from the ring and changing the command field to EMPTY. Alternatively, if a cell interconnect merely copies a packet, the command field would remain unchanged, allowing the packet to continue to circulate through the ring.

All packets circulate through the domain interconnect only once. This property results from an operational protocol in which each operation is created and retired by the same cell interconnect. Cells which extract a packet to add response data must later re-insert the packet.

The operations that the cell interconnect units can perform on packets thus include the following:

PASS PACKET: The cell interconnect unit passes a packet from its ring inputs to its ring outputs without any modification if the packet specifies an address of which the cell interconnect has no knowledge.
EXTRACT PACKET: The cell interconnect unit extracts a packet from the ring if it represents a request the cell interconnect unit made to the ring or contains an address the cell interconnect unit must act upon. When a cell interconnect unit extracts a packet from the ring it modifies the command of the packet to indicate the extraction.

SEND PACKET to the Cache Bus: The cell interconnect unit sends each packet that it extracts from the ring to the cache bus for service by the cache controller.

RECEIVE PACKET from the Cache Bus: The cache controller can send a packet to the cell interconnect unit for insertion into the ring. The cell interconnect unit receives these packets and retains them until they can be inserted into the ring.

INSERT PACKET: The cell interconnect unit inserts a packet into the ring whenever it has a packet awaiting insertion and the current ring packet is marked as EMPTY.

In a preferred embodiment of the invention, the domain interconnect formed by rings A and B supports two sets of fields, referred to as the domain fields and the cell interconnect unit fields. The domain fields are established by serial connections from one cell interconnect to the next cell interconnect, which form a ring. Each cell interconnect has a separate receive and transmit port for the domain fields, as indicated in FIGURE 4. The cell interconnect unit fields provide communication among the cell interconnect units of the cell. The domain fields are summarized below in Table II:

TABLE II

DOMAIN FIELDS

DOMAIN DATA

DOMAIN ECC

DOMAIN HEADER

DOMAIN CLOCK

CIU ID

CIU CELL ADDRESS

CIU EXTRACT

The DOMAIN DATA and DOMAIN ECC fields are responsible for moving the data of ring operations. Each operation is a packet of ten domain bus transfers. The DOMAIN HEADER field marks the beginning of an operation. The DOMAIN CLOCK field provides timing for the shift register structure in cooperation with the clock generator illustrated in Figure 7. The CIU ID field identifies the type of cell interconnect unit involved in a given transfer. The CIU CELL ADDRESS field identified the domain local address of the cell. The CIU EXTRACT field communicates information between cell interconnect units.

In operation, the DOMAIN DATA field transmits the address, command, and data information corresponding to an operation. The configuration of the DOMAIN DATA field consists first of an address, then a command, and finally eight data values, one or more of which may be empty.

The DOMAIN ECC field transmits a Hamming based error correction code (ECC) word for each domain data transfer. DOMAIN ECC is not generated or checked by the cell interconnect units, but passed unchanged to the target units.

The DOMAIN HEADER field designates a given word in the current domain data transfer as the first word of a packet.

The assertion of the DOMAIN RESET signal by the domain structure or domain power controller causes each cell interconnect and corresponding cell to enter a reset state. The reset state is described in the aforementioned copending European application.

The assertion of CELL RESET by a cell causes the corresponding cell and cell interconnect to reset. When reset, cell interconnects perform only PASS PACKET operations.

The cell interconnect unit control fields provide for communication specific to the cell interconnect units. These cell interconnect unit control fields are summarized below in Table III.

TABLE III

CIU Control Fields

CIU ID

CIU EXTRACT

CIU CELL ADDRESS

THE CIU ID field for each CIU is established by the configuration of electrical connections from the CIU to power and ground terminals. This configuration establishes a unique CIU identification number for each CIU. The interpretation of the identification number depends upon whether the plural ring structure is configured in a two-way or a four-way memory interleaving mode. Normally, ring A is configured for even page addresses in memory and ring B for odd page addresses in memory. However, those skilled in the art will appreciate that the shift register structure can be configured to pass all addresses on either ring. Page address interleaving is normally configured at system configuration time by control locations in the cell interconnects. Table IV below summarizes interpretation of id numbers in the two-way interleaved mode.

TABLE IV

| TWO WAY INTERLEAVED | |
| --- | --- |
| ID VALUE | DEFINITION |
| 0 | Master CIU 1 |
| 1 | Master CIU 1 |
| 2 | Slave CIU 0 |
| 3 | Slave CIU 1 |

Table V below summarizes interpretation of id numbers in the four-way interleaved mode:

TABLE V

| FOUR WAY INTERLEAVED | |
| --- | --- |
| ID VALUE | DEFINITION |
| 0 | MASTER 0 |
| 1 | Master CIU 1 |
| 2 | Master CIU 2 |
| 3 | Master CIU 3 |

When two CIUs are partnered as master and slave, the slave cell interconnect unit drives a one-bit CIU EXTRACT signal which is read by its partner master cell interconnect unit. The CIU EXTRACT signal is asserted or deasserted according to whether the slave CIU identifies the current operation as requiring removal from the shift register structure.

The CIU CELL ADDRESS signal represents the address within the domain of the cell asserting the signal.

In accordance with the invention, all domain interconnect transfers form a single packet. The domain interconnect formed by the plural rings is initialized to contain a fixed number of packets based on the number of cell interconnects. For example, a twenty cell domain interconnect contains eight packets per ring. Thus, in this example, eight packets per ring, of sixteen packets per domain interconnect, can be transferred in parallel.

In a preferred practice of the invention in conjunction with a multiprocessor structure like that described in the aforementioned copending European application, the cell interconnect performs two levels of interpretation in order to determine how to operate on a packet. First, the cell interconnect examines the address specified in the packet. The cell interconnect may be configured to operate as a positive or a negative filter. As a positive filter, it operates on any System Virtual Address (SVA) that has an entry in its cache descriptors. The interaction of SVA addresses and cache descriptors is further described in the aforementioned copending application. The positive filter configuration is used when a cell interconnect is connected to a cache either directly or by a remote interface. The negative filter configuration is used when the cell interconnect is connected to a router. In either configuration, the cell interconnect operates on SVA addresses directed to it.

Secondly, having recognised an address, the cell interconnect examines the command portion of the packet to determine if it can modify the response field of the command and allow the packet to proceed, or whether it must extract the packet from the domain interconnect.

A cell interconnect can insert a packet into the ring when an empty packet arrives. An empty packet is indicated by an IDLE operation type in the command word of the packet. Evenly distributed usage of the packets of the ring is provided by the invention because no cell interconnect can use a pocket that it has just emptied by an extraction operation. In order to perform an insertion, the cell interconnect must place its operation into the ten consecutive stages of the empty packet.

It will be understood that given the plural ring structure of the invention, the cell interconnect which initially injects a particular operation into the ring will eventually receive that operation back. At that time, the cell interconnect destroys the operation by changing the command word to IDLE. Any cell interconnect that removes an operation it did not create must return that operation to the ring.

A cell interconnect extracts an operation from the ring by copying its contents from the ten consecutive stages of its packet and writing the IDLE operation type into the command word of the packet. Any cell interconnect that extracts an operation it did not create must return that operation to the ring.

The bus structures are initialized in two steps. First, the domain stages are formatted into ten word packets by initializing the domain header signal. Secondly, each packet is initialized to an IDLE state. If the number of stages in either ring is not an even multiple of ten stages, or if the circular path is logically broken, the ring will not initialize.

In a preferred embodiment of the invention, bus initialization is performed by software, with call interconnect assist. Within each cell interconnect is a DOMAIN HEADER STATUS bit which indicates whether the domain is properly formatted by verification of the DOMAIN HEADER signal. If the DOMAIN HEADER STATUS bit indicates that a given ring is improperly formatted, then a SETUP DOMAIN command issued by a given cell to a cell interconnect performs domain initialization.

It will thus be seen that the invention efficiently attains the objects sat forth above, among those made apparent from the preceding description. It will be understood that changes may be made in the above construction and in the foregoing sequences of operation without departing from the scope of the invention. It is accordingly intended that all matter contained in the above description or shown in the accompanying drawings be interpreted as illustrative rather than in a limiting sense.

It is also understood that the following claims are intended to cover all of the generic and specific features of the invention as described heroin, and all statements of the scope of the invention which, as a matter of language, might be said to fall therebetween.

Embodiments of the invention may, in particular, include the features of the following enumerated paragraphs ("paras").

1. Digital data processing apparatus comprising

    A. bus means for transferring information-representative digital signals, said bus means including shift register means having a set of digital storage and transfer stages connected in series, for sequentially storing and transferring said information-representative digital signals, and

    B. a plurality of processing cello, connected in a ring configuration to said bus means, at least one of said cells including any of

        (1) a central processing unit,

        (ii) an associated memory element for storing information-representative digital signals, coupled with said central processing unit for information transfer therebetween, and

        (iii)associated cell interconnect means, connected in circuit with said shift register means, and with an associated central processing unit, for transferring information-representative signals onto said shift register means.

2. Digital data processing apparatus as in para 1, characterised in that said bus means comprises unidirectional information-representative signal flow paths, and said cell interconnect means include means for driving information-representative signals along the flow path defined by said bus means.

3. Digital data processing apparatus as in para 1, characterised in that each stage of said shift register means includes means for storing a digital information-representative signal word of (n) digital bits, where (n) is a positive integer, and said cell interconnect means include timing control means responsive to at least one set of applied digital clock cycle signals for sequentially driving information-representative digital words through successive stages of said shift register means at a rate responsive to the rate of said at least one set of digital clock cycles.

4. Data processing apparatus as in para 3, characterised in that said shift register means includes means for storing a given digital word in a given stage of said shift register means, and transferring a given digital word to a succeeding stage of said shift register means after an applied digital clock cycle, and each cell interconnect means has associated therewith a subset of (s) stages of said shift reSister means, where (s) is a positive integer, so that a given digital word is resident in a stage associated with each cell interconnect means for (s) applied digital clock cycles.

5. Data processing apparatus as in para 4 characterised in that said shift register means includes means for sequentially transferring digital signal packets comprising (w) corresponding digital words, where (w) is a positive integer, so that a digital word corresponding to a given digital signal packet is resident in at least one stage associated with a given cell interconnect means for (s) (w) applied digital clock cycles.

6. Data processing apparatus as in para 5, wherein said shift register means includes means for simultaneously transferring to successive shift register stages (p) digital signal packets, where (p) is a positive integer given by

$$(p) = (c)(s)/(w)$$

where (c) is the number of said cell interconnect means, (s) is the number of the said shift register stages associated with each said cell interconnect means and (w) is the number of digital words in each digital signal packet.

7. Data processing apparatus as in para 6, characterised in that at least one of said processing cells include means for generating and transmitting to an associated cell interconnect means a cell interconnect control signal representative of a request to store an information-representative signal in an associated stage of said shift register means.

8. Data processing apparatus as in para 6, characterised in that at least one of said processing cells includes means for generating and transmitting to an associated cell interconnect means a cell interconnect control signal representative of a request for access to an information-representative signal stored in an associated stage of said shift register means.

9. Data processing apparatus as in para 8, characterised in that said associated cell interconnect means includes means, responsive to said cell interconnect control signal, for extracting said information-representative signal stored in said associated stage of said shift register means and for transferring said extracted information-representative signal to said associated cell.

10. Data processing apparatus as in para 8, characterised in that said associated cell interconnect means includes means, responsive to said cell interconnect control signal, for replicating said information-representative signal stored in said associated stage of said shift register means and for transferring said replicated information-representative signal to said cell.

11. Data processing apparatus as in para 6, characterised in that at least one of said processing cells includes means for generating and transmitting to an associated cell interconnect means, a cell interconnect control signal representative of a request to transfer unchanged an information-representative signal stored in a first associated stage of said shift register means to a second, succeeding associated stage of said shift register means.

12. Data processing apparatus as in para 11, wherein said associated cell interconnect means includes means, responsive to said cell interconnect control signal, for enabling transfer to said second, succeeding associated stage of said shift register means said information-representative signal stored in said first associated stage of said shift register means.

13. Data processing apparatus as in para 6, characterised in that at least one of said processing cells include means for generating and transmitting to an associated cell interconnect means a cell interconnect control signal representative of a request to identify a given digital word stored in an associated stage of said shift register means as the first word of a data packet.

14. Data processing apparatus as in para 13, characterised in that said associated cell interconnect means includes means, responsive to said cell interconnect control signal, for setting a portion of said given digital word to a selected value identifying said given digital word as the first word of said data packet.

15. Digital data processing apparatus as in para 1, characterised in that said cell interconnect means comprises a subset of serially connected stages of said shift register means.

16. Data processing apparatus as in para 6, characterised in that each said digital signal packet includes at least one digital word representative of a memory address, at least one digital word representative of a command, and at least one digital word representative of data.

17. Data processing apparatus as in para 6, wherein at least one of said processing cells includes means for generating and transmitting to an associated cell interconnect a plurality of cell interconnect control signals representative of a request to execute any of extracting, passing, and copying a given digital signal packet stored in said shift register means, and at least one cell interconnect means associated with said at least one processing cell includes means, responsive to said cell interconnect control signals for assembling said digital signal packets.

18. Data processing apparatus as in para 11 characterised in that at least one of said processing cells includes means for addressing a directory lockup table and for retrieving therefrom a directory lookup value, and at least one cell interconnect means associated with said at least one processing cell includes means, responsive to said directory lockup value, for extracting a given digital signal packet stored in said shift register means.

19. Digital data processing apparatus comprising bus means for transferring information-representative digital signals, said bus means including shift register means having a set of digital storage and transfer stages connected in series, for sequentially storing and transferring said information-representative digital signals, and a plurality of processing cells, connected to said bus means, at least one of said cells including any of

(i) a central processing unit,
(ii) an associated memory element for storing information-representative digital signals, coupled with said central processing unit for information transfer therebetween, and
(iii) associated cell interconnect means, connected in circuit with said shift register means, and with an associated central processing unit, for transferring information-representative signals onto said shift register means, said cell interconnect means include timing control means, responsive to at least one set of applied digital clock cycle signals, for sequentially driving information-representative digital words through successive stages of said shift register means at a rate responsive to the rate of said at least one set of digital clock cycles, wherein as the number (s) of stages of said shift register means increases, the flux of said digital words through said stages of said shift register means remains constant.

20. Data processing apparatus as in para 19, characterised in that clock cycle skew associated with said at least one set of digital clock cycles remains substantially constant with reference to each of said (s) stages of said shift register means as the number (s) increases.

## Claims

1. A digital data transfer apparatus comprising:

A. a communications network for transferring packets, said communications network including shift register means comprising a series of digital storage and transfer stages connected in a ring configuration for sequentially storing and transferring said packets, wherein each said ring configuration for sequentially storing and transferring said packets, wherein each said stage within said shift register stores at least one said word,
B a plurality of cells, each cell including

i a memory for storing information; and
ii. a cell interconnect unit connected to an associated subset of said stages and said associated memory, the cell interconnect selectively performing

(a) a transfer operation to enable said associated subset of said stages to transfer a pocket received from a said stage associated with another of said cells to a said stage associated with yet another of said cells,
(b) an extracting operation to enable said associated subset of stages to transfer a packet received from a said stage associated with another of said cells to the
(c) a replicating operation to enable said associated subset of stages to transfer a packet received from a said stages associated with another of said cells to a said stage associated with yet another of said cells, and contemporaneously transfer the packet to the memory associated with its cell.

2. A data transfer apparatus as defined in claim 1 further characterized in that each said cell interconnect unit is connected to at least two serially-connected ones of said plurality of said stages.

3. A data transfer apparatus as defined in claim 1 further characterized in that said cell interconnect unit selectively performs said transfer, extracting and replicating operations in connection with a said packet while at least a portion of that packet is stored within said associated subset of stages.

**4.** A data transfer apparatus as defined in claim 1 further characterized in that said cell interconnect unit is responsive to a applied digital clock cycle signal for simultaneously transferring at least a selected digital signal packet through successive stages of said associated subset of stages at a rate responsive to said digital clock cycle signal.

**5.** A data transfer apparatus as defined in claim 1 further characterized in that said cell interconnect unit further selectively performs a modifying operation for modifying at least some of the information in a packet received from a said stage associated with another of said cells, and thereafter enabling its associated subset of stages to transfer the packet to a said digital storage and transfer stage associated with yet another of said cells.

**6.** A data transfer apparatus as defined in claim 5, wherein said cell interconnect unit selectively performs said at least one of modifying, extracting, replicating and transferring operations on said same digital signal packet based on an association, if any, between information in the packet and information stored in said associated memory.

**7.** A data transfer apparatus as defined in claim 6, wherein said cell interconnect unit of said at least one cell includes

> A a directory for storing information representative of information stored in said associated memory; and
> B. a comparator for generating a cell interconnect control signal in response to a comparison between information in a packet in one of said stages connected to said cell interconnect unit and said information in said directory; and
> C. a packet control unit selectively responsive to said cell interconnect control signal for performing said at least one of said modifying, extracting, replicating and transferring operation on said packet.

**8.** A data transfer apparatus as defined in claim 1, wherein said at least one cell includes a packet store request generator for generating a packet store request, said associated cell interconnect unit being responsive said packet store request for storing a packet in a stage of said shift register associated with said at least one cell.

**9.** A data transfer apparatus as defined in claim 1, wherein said at least one cell includes a packet access request generator for generating a packet access request, said associated cell interconnect unit being responsive to said packet access request for providing said cell access to a packet stored in a stage said shift register associated with said at least one cell.

**10.** A data transfer apparatus as defined in claim 1, wherein said at least one cell includes a packet extraction request generator for generating a packet extraction request, said associated cell interconnect unit being responsive to said packet extraction request for extracting information stored in an associated stage of said shift register and for transferring the extracted information to said associated cell.

**11.** A data transfer apparatus as defined in claim 1, wherein said at least one cell includes a packet replication request generator for generating a packet replication request, said associated cell interconnect unit being responsive to said packet replication request for replicating information stored in an associated stage of said shift register and for transferring the replicated information to said associated cell.

**12.** A data transfer apparatus as defined in claim 1, wherein said at least one cell includes a packet transfer request generator for generating a packet transfer request, said associated cell interconnect unit being responsive to said packet transfer request for transferring unchanged information stored in a first stage of said shift register associated with said cell to a second, succeeding stage of stage shift register associated with said cell, thereby to facilitate transfer of a packet from one other cell to a second other cell.

**13.** A data transfer apparatus as defined in claim 1, wherein said at least one cell includes a packet identify request generator for generating a packet identify request, said associated cell interconnect unit being responsive to said packet identify request to generate a packet identification identifying information stored in a said stage of said shift register associated with said at least one cell.

**14.** A data transfer apparatus as defined in claim 13, wherein said at least one cell includes a packet identify command generator for generating a packet identify command, said cell interconnect unit being responsive to said packet identify command signal for setting information stored in an associated stage of said shift register to a selected value identifying that information signal as the first such signal in a packet.

**15.** A data transfer apparatus as defined in claim 1, wherein said cell interconnect unit includes a packet assembler for assembling a packet including information comprising an address, a command, and data.

16. A data transfer apparatus as defined in claim 1, wherein said shift register stages are responsive to a common digital clock signal for controlling the transfer of packets to each respective succeeding stage of said shift register.

17. A digital data transfer apparatus as defined in claim 16 wherein each stage stores one of a plurality of words of said packet, said packet being resident in a plurality of successive stages for a like number of cycles of said common digital clock signal.

18. A digital data transfer apparatus as defined in claim 1, wherein said cell interconnect unit includes at least one of

A an insert buffer for storing at least a selected packet for transfer to at least one stage associated with said cell for insertion into said shift register means, and
B. an extraction buffer for storing at least a selected digital signal packet extracted from said at least one stage associated with said cell.

FIG. 1

FIG. 3

cache_parity(8)
cache_data(64)
cache_op(4)
cache_flow_rout(2)
cache_flow_dmn(4)
cache_arb(3)

CACHE 0

cell_reset(1)
cell_clk50(1)
cell_clk_sync(1)

p_cadt_stall(1)
p_long_stall(1)
p_data_parity(8)
p_data(64)
p_data_cmd(8)
p_cache_grant(1)
p_cache_rsp_rep(1)

p_quash(1)
p_instr_stall(1)
p_instr_parity(4)
p_instr(32)
p_instr_cmd(2)
cache_ins_req(1)

40

p_cache_rsp_req(1)
p_cache_grant(1)
p_data_cmd(8)
p_data(64)
p_data_parity(8)
p_long_stall(1)

PROC 0

p_cache_ins_req(1)
p_instr_cmd(2)
p_instr(32)
p_instr_parity(4)
p_instr_stall(1)
p_quash(1)

p_cadt_stall(1)

dmn_reset

p_reset(1)

cell_reset(1)
cell_clk50(1)
cell_clk_sync(1)

50

# FIG. 2B

EP 0 936 778 A1

dmna_data_in_l  W=64
dmna_parity_in_l  W=8
dmna_hdr_in_l
dmna_empty_in_l
dmna_data_in_h  W=64
dmna_parity_in_h  W=8
dmna_hdr_in_h
dmna_empty_in_h
dmnb_data_in_l  W=64
dmnb_parity_in_l  W=8
dmnb_hdr_in_l
dmnb_empty_in_l
dmnb_data_in_h  W=64

dmnb_parity_in_h  W=8
dmnb_hdr_in_h
dmnb_empty_in_h

dmn_cell_addr  W=8

dmna_data_in_l(64)
dmna_parity_in_l(8)
dmna_hdr_in_l(1)
dmna_empty_in_l(1)
dmna_data_in_h(64)
dmna_parity_in_h(8)
dmna_hdr_in_h(1)
dmna_empty_in_h(1)
dmnb_data_in_l(64)
dmnb_parity_in_l(8)
dmnb_hdr_in_l(1)
dmnb_empty_in_l(1)
dmnb_data_in_h(64)

dmnb_parity_in_h(8)
dmnb_hdr_in_h(1)
dmnb_empty_in_h(1)

dmn_cell_addr(8)       CIO

cache_arb(3)
cache_flow_dmn(4)
cache_flow_rout(2)
cache_op(4)
cache_data(64)
cache_parity(8)

dmna_data_out_l(64)
dmna_parity_out_l(8)
dmna_hdr_out_l(1)
dmna_empty_out_l(1)
dmna_data_out_h(64)
dmna_parity_out_h(8)
dmna_hdr_out_h(1)
dmna_empty_out_h(1)
dmnb_data_out_l(64)
dmnb_parity_out_l(8)
dmnb_hdr_out_l(1)
dmnb_empty_out_l(1)
dmnb_data_out_h(64)

dmnb_parity_out_h(8)
dmnb_hdr_out_h(1)
dmnb_empty_out_h(1)

dmna_clk50_l(1)
dmna_clk50_h(1)
dmnb_clk50_l(1)
dmnb_clk50_h(1)

cell_reset(1)
cell_clk50(1)
cell_clk_sync(1)

dmna_data_out_l  W=64
dmna_parity_out_l  W=8
dmna_hdr_out_t
dmna_empty_out_l
dmna_data_out_h  W=64
dmna_parity_out_h  W=8
dmna_hdr_out_h
dmna_empty_out_h
dmnb_data_out_l  W=64
dmnb_parity_out_l  W=8
dmnb_hdr_out_l
dmnb_empty_out_l
dmnb_data_out_h  W=64

dmnb_parity_out_h  W=8
dmnb_hdr_out_h
dmnb_empty_out_h

dmna_clk50_l
dmna_clk50_h
dmnb_clk50_l
dmnb_clk50_h

10

TO 40 (FIG.2B)

TO 40 (FIG.2B)

# FIG. 2A

dmna_data_in_l W=64 — dmna_data_in(64)
dmna_parity_in_l W=8 — dmna_parity_in(8)
dmna_hdr_in_l — dmna_hdr_in(1)
dmna_empty_in_l — dmna_empty_in(1)

dmna_data_out(64) — dmna_data_out_l W=64
dmna_parity_out(8) — dmna_parity_out_l W=8
dmna_hdr_out(1) — dmna_hdr_out_l W=2
dmna_empty_out(1) — dmna_empty_out_l W=3

dmn_cell_addr W=8 — dmn_cell_addr(8)
dmna_clk50_l — dmn_clk50(1)

cache_arb_id0(3)
cache_arb_idi(3)

CIU 0

cache_arb W=3 — cache_arb_id4_2(3)
cache_flow_dmn W=4 — 3:0 — cache_flow_dmn(1)
cache_flow_rout — W=2 — cache_flow_rout(2)
cache_opt W=4 — cache_op(4)
cache_data W=64 — 31:0 — cache_data(32)
cache_parity W=8 — cache_parity(4)
3:0

sram_data_a(4) — data(4)
sram_addr_9(4) — 3:0 — address(16)
sram_addr(6) — 9:4
15:10

SRAM 64k x 40

cell_reset — cell_reset(1)
cell_clk50 — cell_clk50(1)
cell_clk_sync — cell_clk_sync(1)

sram_ce(1) — ce(1)
sram_we(1) — we(1)
sram_data_p(4)
hit_in(1)
hit_out(1)

70

72

TO FIG. 4B

*FIG. 4A*

TO FIG. 4B

20

**FIG. 4B**

FROM FIG.4A

SRAM64k x 40 — 71

we(1)
ce(1)
address(16)
data(4)

9:4
15:10
3:0

hit_out(1)
hit_in(1)
sram_data_p(4)
sram_we(1)
sram_ce(1)

sram_addr(6)
sram_addr_9(4)
sram_data_a(4)

dmna_empty_out(1)
dmna_hdr_out(1)
dmna_parity_out(8)
dmna_data_out(64)

CIU0 — 73

cell_clk_sync(1)
cell_clk50(1)
cell_reset(1)

cache_parity(4)
cache_data(32)
cache_op(4)
cache_flow_rout(2)
cache_flow_dmn(1)
cache_arb_id4_2(3)

cache_arb_id1(3)
cache_arb_id0(3)

dmn_clk50(1)
dmn_cell_addr(8)

dmna_empty_in(1)
dmna_hdr_in(1)
dmna_parity_in(8)
dmna_data_in(64)

7:4
(63:32)

2

W=8
W=64

dmna_empty_out_h W=8
dmna_hdr_out_h
dmna_parity_out_h W=64
dmna_data_out_h W=64

— 20

FROM FIG.4A

TO FIG.4C

dmna_clk50_h

dmna_empty_in_h
dmna_hdr_in_h
dmna_parity_in_h
dmna_data_in_h

17

EP 0 936 778 A1

TO FIG. 4B

W=64

dmnb_ data_ in_ /
dmnb_ parity_in_ /
dmnb_ hdr_ in_ /
dmnb_ empty_ in_ /

W=8

dmnb_ clk50_ /

dmna_ data_ in(64)
dmna_ parity_ in(8)
dmna_ hdr_ in(1)
dmna_ empty_ in(1)

dmn_ cell_ addr(8)
dmn_ clk50(1)

cache_ arb_ id0(3)
cache_ arb_ id1(3)

cache_ arb_ id4_ 2(3)
cache_ flow_ dmn(1)
cache_ flow_ rout(2)
cache_ op(4)
cache_ data(32)
cache_ parity(4)

31:0
3:0

cell_ reset(1)
cell_ clk50(1)
cell_ clk_ sync(1)

CIU 0

dmna_ data_ out(64)
dmna_ parity_ out(8)
dmna_ hdr_ out(1)
dmna_ empty_ out(1)

dmnb_ data_ out_ /   W=64
dmnb_ parity_ out_ /  W=8
dmnb_ hdr_ out_ /
dmnb_ empty_ out_ /

62

60

sram_ data_ a(4)
sram_ addr_ 9(4)
sram_ addr(6)

sram_ ce(1)
sram_ we(1)
sram_ data_ p(4)
hit_ in(1)
hit_ out(1)

3:0
9:4
15:10

data(4)
address(16)

SRAM64k x 40

ce(1)
we(1)

10

TO FIG. 4D

TO FIG. 4D

*FIG. 4C*

EP 0 936 778 A1

TO FIG. 4C

~63

cell_clk_sync(1)
cell_clk50(1)
cell_reset(1)
cache_parity(4)
cache_data(32)
cache_op(4)
cache_flow_rout(2)
7:4 — cache_flow_dmn(1)
63:32 — 3 — cache_arb_id4_2(3)

cache_arb_id1(3)
cache_arb_id0(3)

CIU 0

dmnb_clk50_h — dmn_clk50(1)
dmn_cell_addr(8)

dmnb_empty_in_h — dmn_empty_in(1)
dmnb_hdr_in_h — dmna_hdr_in(1)
dmnb_parity_in_h — W=8 — dmn_parity_in(8)
dmnb_data_in_h — W=64 — dmna_data_in(64)

TO FIG. 4C

hit_out(1)
hit_in(1)
sram_data_p(4)
sram_we(1)
sram_ce(1)

9:4
sram_addr(6)
sram_addr_g(4)     15:10
sram_data_a(4)     3:0

61

we(1)
ce(1)

SRAM64k x 40

address(16)
data(4)

dmna_empty_out(1) — dmnb_empty_out_h
dmna_hdr_out(1) — dmnb_hdr_out_h
dmna_parity_out(8) — dmnb_parity_out_h W=8
dmna_data_out(64) — dmnb_data_out_h W=64

# FIG. 4D

FIG. 5A

FIG. 5B

# FIG. 5C

cl_phil  cl_phi2

cl_phil(1)  cl_phi2(2)  82

new_sram_data(4)  sram_cntr/0
sram_data_a(4)  sram_cmd(2)
sram_data_p(4)  new_state(3)
sram_ce(1)  state(3)
sram_we(1)  sram_error(1)

85

ciu_master0

dmn_cmd(4)
cg_bus_cmd(8)
extract_stat(2)
extract_cmd(2)
insrt_stat(2)
insrt_cmd(2)
sram_cad(2)  cmd_h(8)
new_state(3)  cmd_l(8)
state(3)  cmd_preview(3)
sram_error(1)  dir_cmd(4)

other_hit(1)  hit(2)
dmn_reset(1)  summary(1)
cache_reset(1)  parity_error(1)
dmn_empty_out(1)  created(1)
dmn_hdr_out(1)  new_slb_state(7)
dmn_empty_in(1)  slb_state(7)
dmn_hdr_in(1)  c3_phi2(1)  c3_phi2
rcv_cb(1)  c3_phil(1)  c3_phil
send_cb(1)  cl_phi2(1)  cl_phi2
cb_cmd(2)  cl_phi1(1)  cl_phil

cl_phil  cl_phi2  83

id(2)  cl_phil(1)  cl_phi2(1)
cache_flow_o(1)  cb_cntr/0  rcv_cb(1)
cache_flow_i(2)  send_cb(1)
cache_op(4)  cb_cmd(2)
cache_arb(5)  extract_empty(1)

TO FIG. 5A

TO FIG. 0

22

EP 0 936 778 A1

FIG. 6

FIG. 7

FIG. 8

**European Patent Office**

## EUROPEAN SEARCH REPORT

Application Number

EP 99 20 1131

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br>A | US 4 510 492 A (K. MORI) 9 April 1985<br>* column 3, line 6 - column 4, line 65 *<br>* abstract; figures 1,4 * | 1<br>2-18 | H04L12/433 |
| A | US 4 193 121 A (S. FEDIDA) 11 March 1980<br>* the whole document * | 1 | |
| A | US 4 468 733 A (T. OKA) 28 August 1984<br>* the whole document * | 1 | |
| A | PATENT ABSTRACTS OF JAPAN<br>vol. 8, no. 219 (P-306), 5 October 1984<br>& JP 59 103166 A (K. NOBUAKI),<br>14 June 1984<br>* abstract * | 1 | |

TECHNICAL FIELDS
SEARCHED (Int.Cl.6)

H04L
G06F

The present search report has been drawn up for all claims

| Place of search | Date of completion of the search | Examiner |
|---|---|---|
| THE HAGUE | 23 June 1999 | Soler, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 20 1131

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-1999

| Patent document cited in search report | | Publication date | Patent family member(s) | | Publication date |
|---|---|---|---|---|---|
| US 4510492 | A | 09-04-1985 | JP | 1614786 C | 15-08-1991 |
| | | | JP | 2037740 B | 27-08-1990 |
| | | | JP | 57166756 A | 14-10-1982 |
| | | | EP | 0062347 A | 13-10-1982 |
| | | | US | RE32887 E | 14-03-1989 |
| US 4193121 | A | 11-03-1980 | GB | 1580057 A | 26-11-1980 |
| | | | DE | 2732220 A | 26-01-1978 |
| | | | JP | 53011541 A | 02-02-1978 |
| US 4468733 | A | 28-08-1984 | JP | 1408040 C | 27-10-1987 |
| | | | JP | 57000733 A | 05-01-1982 |
| | | | JP | 62013707 B | 28-03-1987 |
| | | | JP | 57000734 A | 05-01-1982 |
| | | | JP | 57000735 A | 05-01-1982 |
| | | | JP | 57000736 A | 05-01-1982 |
| | | | DE | 3122076 A | 18-02-1982 |
| | | | GB | 2077468 A,B | 16-12-1981 |

EPO FORM P0459

For more details about this annex : see Official Journal of the European Patent Office, No. 12/82